# EUROPEAN PATENT SPECIFICATION

(11) **EP 3 380 754 B1**
(45) Date of publication and mention of the grant of the patent: **07.10.2020**
(21) Application number: 16867475.2
(22) Date of filing: 21.11.2016
(51) Int. Cl.: F16H 61/448, F16H 39/14

(54) **LOAD CANCELLING HYDROSTATIC SYSTEM**
LASTUNTERDRÜCKENDES HYDROSTATISCHES SYSTEM
SYSTÈME HYDROSTATIQUE D'ANNULATION DE CHARGE

(30) Priority: 25.11.2015 US 201562260198 P
(43) Date of publication of application: 03.10.2018
(73) Proprietor: Kinetics Drive Solutions Inc., Langley, BC V4W 3X1 (CA)
(72) Inventor: DYCK, Gerald, Abbotsford, British Columbia V3G 2Y2 (CA); CALDARELLA, Francesco, Lynden, Washington 98264 (US); CZEPAK, John, Langley, British Columbia V2Y 1C3 (CA)
(74) Representative: Beyer, Andreas
(86) International application number: PCT/CA2016/051356
(87) International publication number: WO 2017/088045

(56) References cited:
- WO-A1-2015/001529
- DE-A1- 2 335 629
- DE-C- 962 486
- GB-A- 804 325
- US-A- 2 967 395
- US-A- 3 052 098
- US-A- 3 834 164
- US-A- 5 678 405
- US-A1- 2007 277 520
- US-A1- 2011 061 524
- US-B2- 6 945 041
- US-B2- 8 240 145

## Description

### Technical Field

The present invention pertains to hydrostatic assemblies, modules, and systems thereof.

### Background

Hydrostatic modules or assemblies are hydraulic devices used in hydrostatic and power splitting transmissions to effect ratio changes between the transmission input and output. Such assemblies typically comprise two (i.e. 1^{st} and 2^{nd}) hydraulic piston drive units and may be of a bent axis or an axial piston drive design. The two drive units are in fluid communication with each other. One of the hydraulic piston drive units typically functions as a pump and the other typically functions as a motor. Depending on the transmission design, the role of the pump and motor may be permanently or alternately assigned depending on the transmission mode. The speed and torque ratios between the input and output shafts of the module are determined by the displacement ratio between the two hydraulic piston drive units. By making at least one of the drive units a variable displacement type, the speed and torque ratio of the module may be varied.

The amount of power and torque to be transferred through the module will determine the size of the components. Generally, greater torque requires larger displacement drive units. With larger displacement drive units the allowable or permitted operating speed may be reduced as the mass of the rotating components is increased due to the increased size of the drive units. Another issue with using larger components (e.g. larger pistons) is the amplitude of hydraulic pulsation increases, which in turn can result in increased vibration levels. In one approach, the number of pistons in each drive unit can be increased while keeping the piston size smaller. In this way, the amplitude of the pulsation can be kept down while increasing the pulsation frequency for a given rotational speed. However, to accommodate more pistons, the drive flange diameter must increase which can reduce the maximum operating speed.

An alternative to the preceding approach is to take a first hydrostatic module and mount a second hydrostatic module also comprising two (i.e. 3^{rd} and 4^{th}) hydraulic piston drive units in parallel, thereby forming a hydrostatic system. Input shafts are coupled together between modules as are output shafts. Between the two hydrostatic modules, the high pressure fluid ports are connected hydraulically. Similarly, between the two hydrostatic modules, the low pressure fluid ports are also connected hydraulically. In this way, the 1^{st} and 3^{rd} drive units connected to the coupled input shafts share the same drive and boost pressures. Likewise, the 2^{nd} and 4^{th} drive units connected to the coupled output shafts share the same drive and boost pressures. The rotating groups of the hydrostatic piston drive units of the second module effectively mirror the rotating groups of the hydrostatic piston drive units of the first hydrostatic module, i.e. 1^{st} and 3^{rd} drive units have the same number and size of cylinder bores and pistons and share the same geometry. Likewise the 2^{nd} and 4^{th} drive units have the same number and size of cylinder bores and pistons and share the same geometry. Through a common control system, the displacement of the 1^{st} and 3^{rd} drive units may be synchronized. The same may be done with the 2^{nd} and 4^{th} drive units. In this way, torque and power are divided equally between the two hydrostatic modules.

Since the rotating group components (e.g. pistons, drive shaft flanges, etc) of each hydraulic piston drive unit are not increased in size, maximum speeds are not compromised. This results in better power density and increased efficiency. Additional benefits include a single charge and control system shared between the two modules which operate in unison. Additional benefits can be realized with the manner in which the input and output shafts are coupled which will be described later.

In DE 2335629, an infinitely variable transmission is disclosed which utilizes a single primary machine or hydraulic piston drive unit hydraulically coupled to two secondary machines or hydraulic piston drive units. The two secondary machines are connected to each other with a common shaft, and the rotating assembly is supported in the housing by a pair of radial bearings. As realized by one skilled in the art, the radial bearings support only radial loads from the output gear and the secondary machines and such bearings can only accommodate minor axial loads. Depending on the piston size, quantity and drive pressure, the axial component of the loads created by the pistons could be 89,000N force or higher. In the design disclosed in DE 2335629, a large portion of the axial forces in the drive flanges of the secondary machines are balanced against one another by the common shaft.

US8240145 discloses a dual hydrostatic assembly or system with a common shaft driving the two pumps (1^{st} and 3^{rd} hydraulic piston drive units) where the two pumps are arranged opposite one another and the input shafts rotate about the same axis. Similarly, the two motors (2^{nd} and 4^{th} hydraulic piston drive units) have a common shaft where the two motors are arranged opposite one another and the output shafts rotate about the same axis. Each of the pumps and motors are arranged in separate rotatable yokes. Again, by synchronizing the pump displacements, axial loads may be reduced such that the majority of load supported by the shaft bearings are radial.

Document US 3 052 098 A describes a transmission, comprising a transmission housing having journaled therein an input shaft and an output shaft, and also one pump and three motors. The pump comprises a tiltable housing with a cylinder block rotatable therein, wherein the rotatable cylinder block has reciprocally mounted therein pistons which are drivingly connected by connecting rods to the input shaft.

In document GB 804 325 A, hydrostatic axial piston gears with an infinitely variable reduction or step-up transmission ratio are described. In an embodiment, a spur gear differential is provided on a driving shaft side, wherein two axial piston assemblies have connecting flanges, respectively, and two piston barrels working in opposition. The connecting flanges are respectively driven directly by a gear wheel fixed to a hollow shaft and a gear wheel fixed on a driven shaft.

Notwithstanding the progress made to date, there is a continuing need to reduce the size, weight, and cost of these useful hydrostatic modules and associated transmissions. The present invention addresses these and other needs as described below.

### Summary

The present invention concerns a load cancelling hydrostatic system according to claim 1 and a method of cancelling load in a hydrostatic system according to claim 9. The hydrostatic system comprises two or more hydrostatic modules. The system utilizes timed cylinders between rotating groups sharing a common input and a common output drive shaft and synchronized displacement control between appropriate pairs of hydraulic piston drive units. When the shafts of the appropriate pairs of hydraulic piston drive units are connected, the cylinders may be timed (or "clocked") such that the corresponding partner cylinders open and close at the same time. An advantage of this design is that any axial imbalance is cancelled. This allows radial drive shaft bearings to support an essentially purely radial load. The only axial force the bearings need attend to are to keep the rotating assembly from "wandering" from side to side. The same may be done with other appropriate pairs of hydraulic piston drive units in a dual or multiple module system.

Specifically, the load cancelling hydrostatic system comprises at least a first and second hydrostatic module in which the first module comprises a 1^{st} and a 2^{nd} hydraulic piston drive unit and the second module comprises a 3^{rd} and a 4^{th} hydraulic piston drive unit. A common input drive shaft couples the 1^{st} and 3^{rd} hydraulic piston drive units together, and a common output drive shaft couples the 2^{nd} and 4^{th} hydraulic piston drive units together. Each of the hydraulic piston drive units comprises a plurality of pistons. The rotating groups of the hydrostatic piston drive units of the second hydrostatic module effectively mirror the rotating groups of the hydrostatic piston drive units of the first hydrostatic module. That is, the 1^{st} and 3^{rd} hydraulic piston drive units share a similar geometry and the number and size of the pistons in each is the same. And in a like manner, the 2^{nd} and 4^{th} hydraulic piston drive units share a similar geometry and the number and size of the pistons in each is the same. Further, in the present invention, the pistons in the 1^{st} and 3^{rd} hydraulic piston drive units are coupled together with an input timing angle, and the pistons in the 2^{nd} and 4^{th} hydraulic piston drive units are coupled together with an output timing angle. The displacement angle of the 1^{st} and 3^{rd} hydraulic piston drive units are controlled to the same setting i.e. the angle the cylinder block makes with the shaft axis is the same between the 2 units. Likewise, the displacement angle of the 2^{nd} and 4^{th} hydraulic piston drive units are controlled to the same setting. The load cancelling hydrostatic system of the present invention is characterized in that at least one of the input and output timing angles is about 0°. Setting at least one of the input and output timing angles in this manner serves to cancel load in the system. In a preferred embodiment, the input and output timing angles are both about 0.

In other embodiments, the first and second hydrostatic modules can optionally each comprise one or more additional hydraulic piston drive units, each comprising a plurality of pistons. These additional hydraulic piston drive units can also be suitably coupled together in parallel with an appropriate common additional drive shaft or shafts. These additional hydraulic piston drive units can also be coupled with an additional timing angle or angles of about 0°.

The load cancelling hydrostatic system can comprise bearing sets for the common input and output drive shafts in which the bearing sets essentially consist of radial bearings (e.g. in which the bearing sets do not comprise tapered roller bearings). The hydraulic piston drive units can be mounted to independent or common yokes.

In a typical embodiment, the hydraulic piston drive units comprise an odd number of pistons (e.g. nine pistons). Further, the 1^{st} and 3^{rd} hydraulic piston drive units may serve as pumps and the 2^{nd} and 4^{th} hydraulic piston drive units may serve as motors.

### Brief Description of the Drawings

Figure la shows a prior art hydrostatic module comprising two hydraulic piston drive units with independent yokes in a single housing (reproduced from US8240145).
Figure 1b shows a prior art hydrostatic module comprising two hydraulic piston drive units with a common yoke in a single housing (reproduced from US2007/277520).
Figure 2a shows a top view of a dual hydrostatic module suggested in the prior art in which the modules are mounted together with corresponding shafts (obtained by appropriate combination of two modules reproduced from US8240145).
Figure 2b shows a perspective, internal view of a prior art dual hydrostatic module in which the modules are mounted together with corresponding shafts (reproduced from US8240145).
Figure 3 shows a perspective internal view of a portion of a dual hydrostatic module of the invention in which the shaft and piston orientations in the 1^{st} and 3^{rd} hydraulic piston drive units are clocked together with a timing angle of 0°. Figure 3 shows the module at an orientation in which the no.1 cylinders of both the 1^{st} and 3^{rd} hydraulic piston drive units lie in the same vertical plane of the dual hydrostatic module.
Figure 4 shows a different view of the portion of the dual hydrostatic module of Figure 3. The view here is normal to the inlet end of the cylinder block of the 1^{st} hydraulic piston drive unit of the module.
Figure 5 shows a perspective internal view of the 1^{st} hydraulic piston drive unit of the invention with the 1^{st} valve plate and 1^{st} yoke visible and sectioned to show the internal fluid connections.
Figure 6a shows the positions of the inlets to the individual cylinders in the cylinder block of an individual rotating group in the 1^{st} hydraulic piston drive unit relative to the openings in the valve plate at about 8° before the No. 1 piston reaches Top Dead Center (TDC) in its cylinder.
Figure 6b shows the positions of the inlets to the individual cylinders in the cylinder block of Figure 6a when the No. 1 piston reaches TDC in its cylinder.
Figure 6c shows the positions of the inlets to the individual cylinders in the cylinder block of Figure 6a at about 8° after the No. 1 piston rotates past TDC in its cylinder.

### Detailed Description

Unless the context requires otherwise, throughout this specification and claims, the words "comprise", "comprising" and the like are to be construed in an open, inclusive sense. The words "a", "an", and the like are to be considered as meaning at least one and are not limited to just one.

Herein, when used in the context of timing angle, the term "about" is to be defined as +/- 0.5°

An exemplary embodiment of the invention is a dual hydrostatic system utilizing timed cylinders between rotating groups sharing a common input or output shaft and synchronized displacement control between 1^{st} and 3^{rd} hydraulic piston drive units and 2^{nd} and 4^{th} hydraulic piston drive units. The rotating groups of the hydrostatic piston drive units of the second module effectively mirror the rotating groups of the hydrostatic piston drive units of the first hydrostatic module, i.e. 1^{st} and 3^{rd} drive units have the same number and size of cylinder bores and pistons and share the same geometry. Likewise the 2^{nd} and 4^{th} drive units have the same number and size of cylinder bores and pistons and share the same geometry. In a practical such embodiment, the various hydraulic piston drive units can each comprise nine pistons and corresponding cylinders. When the shafts of the 1^{st} and 3^{rd} hydraulic piston drive units are connected, the cylinders are timed (or "clocked") such that the corresponding partner cylinders from 1^{st} and 3^{rd} hydraulic drive units open (and close) at the same time. An advantage of this is that any axial imbalance is cancelled. This allows the radial shaft bearings to support an essentially purely radial load. The only axial force the bearings need attend to are to keep the rotating assembly from "wandering" side to side. The same may be done with the 2^{nd} and 4^{th} hydraulic drive units.

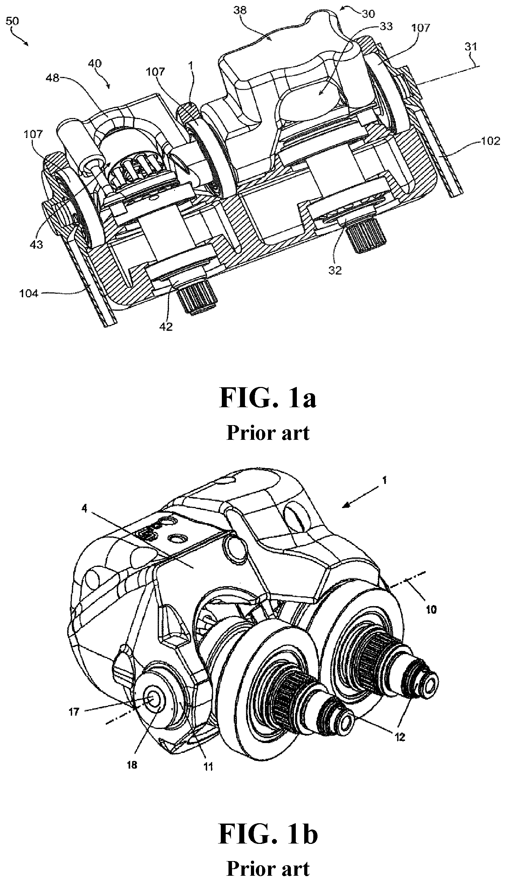

The hydrostatic modules used in the system of the invention may employ independent yokes or common yokes. For instance, Figure la shows a suitable prior art hydrostatic module comprising two hydraulic piston drive units with independent yokes in a single housing. Figure la is reproduced from US8240145 and the original numbering of components therein has been maintained. Alternatively, Figure 1b shows another suitable prior art hydrostatic module comprising two hydraulic piston drive units with a common yoke in a single housing. Figure 1b is reproduced from US2007/277520 and the original numbering of components therein has been maintained here also.

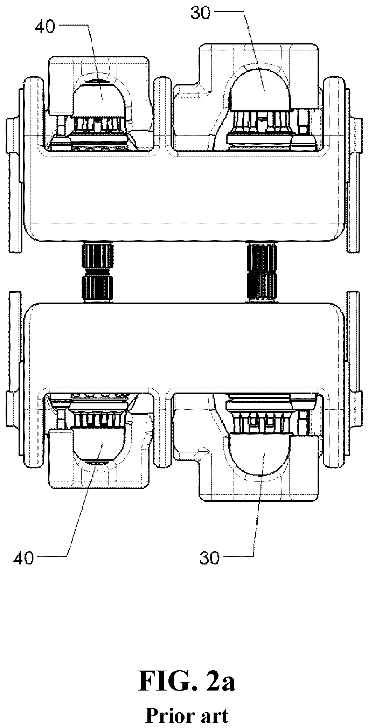

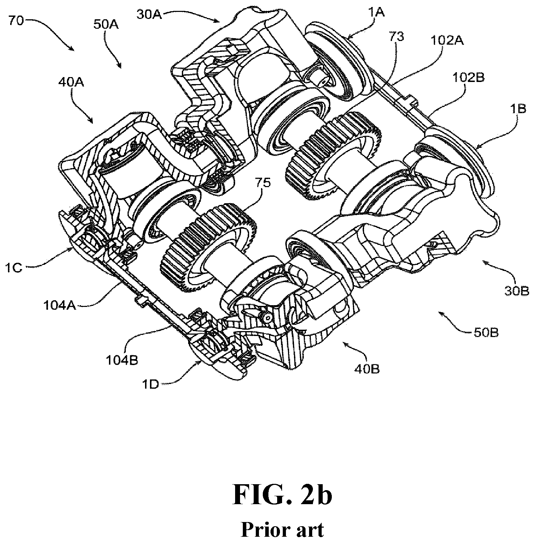

Figure 2a shows a top view of a dual hydrostatic module suggested in the prior art in which two appropriate hydrostatic modules are mounted together with corresponding shafts. The system in Figure 2a here is representative of a dual hydrostatic module suggested in US8240145 and which can be obtained, for example, by appropriate combination of two modules like those illustrated in Fig. 10 of US8240145. (Again, the original numbering of components in US8240145 has been maintained.) Figure 2b shows a perspective, internal view of a prior art dual hydrostatic module (e.g. like that shown in Figure 2a) in which the modules are mounted together with corresponding drive shafts. (Again, the original numbering of components in US8240145 has been maintained.)

The hydrostatic system in Figures 2a and 2b provides for additional drive power by combining two hydrostatic modules, namely first hydrostatic module 50a and second hydrostatic module 50b. First hydrostatic module 50a comprises 1^{st} and 2^{nd} hydraulic piston drive units which function as a pump and a motor (pump 30A and motor 40A in Figure 2b) respectively. In a like manner, second hydrostatic module 50b comprises 3^{rd} and 4^{th} hydraulic piston drive units which also function as a pump and a motor (pump 30B and motor 40B in Figure 2a) respectively. The shafts of the pumps 30A and 30B are coupled together forming a common input drive shaft. A gear 73 is associated with this common input drive shaft. Likewise, the shafts of the motors 40A and 40B are coupled together forming a common output drive shaft. A gear 75 is associated with this common output drive shaft. Both the common input and output drive shafts are provided with radial bearing sets as shown.

Figure 2b also illustrates fluid conduits 102A and 102B for balancing fluid pressure between opposing pumps 30A and 30B and fluid conduits 104A and 104B for balancing fluid pressure between opposing motors 40A and 40B. The fluid conduits 102A, 102B, 104A, and 104B may be integrated into sections 1A, 1B, 1C, and 1D of an external housing, as shown, with the housing having receptacles corresponding with cylindrical interconnects (not shown) allowing fluid communication between tap passage ports and associated fluid conduits 102A, 102B, 104A, and 104B.

In a closed-loop hydraulic system, it is useful to boost supply line pressure to add make-up oil to the system for replacing fluid lost due to leakage. This is accomplished by tapping into one of the fluid passages 102A, 102B, 104A or 104B and supplying relatively low pressure make-up fluid. It is also useful to include in closed-loop hydraulic systems a hot oil flushing sub-system to remove a small amount of oil from the main drive loop for cooling. The flushing may also be accomplished by the tap fluid passages 102A, 102B, 104A and 104B. Conventional closed-loop hydraulic systems typically have external plumbing for providing make-up fluid and for flushing and hence, have no need to have integrated passages in the yokes. In this embodiment of the invention, there is no external manifold or plumbing between the pump and motor, therefore the tap fluid passage is incorporated in each yoke with a separate fluid interconnect. Valves (not shown) in the external housing may be used to control the flow into and out of the tap fluid passages 102A, 102B, 104A and 104B.

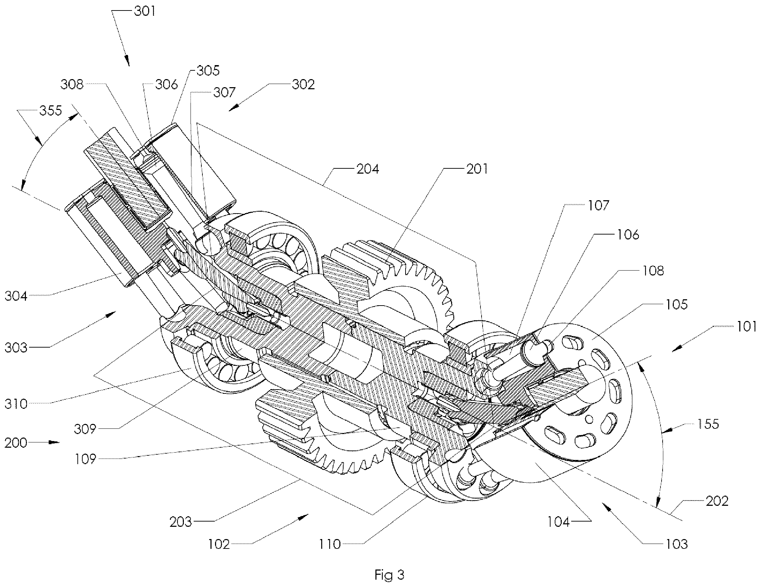

Figure 3 shows a perspective internal view of a portion of a dual hydrostatic module of the invention in which 1^{st} hydraulic piston drive unit 101 is shown coupled to 3^{rd} hydraulic piston drive unit 301. Each of 1^{st} and 3^{rd} hydraulic piston drive units 101, 301 comprises a rotating group, namely 1^{st} and 3^{rd} rotating groups 102, 302 respectively. Each of 1^{st} and 3^{rd} rotating groups 102, 302 comprises a cylinder block assembly, namely 1^{st} and 3^{rd} cylinder block assemblies 103, 303 respectively. Further, each of 1^{st} and 3^{rd} cylinder block assemblies 103, 303 comprises cylinder blocks, namely 1^{st} and 3^{rd} cylinder blocks 104, 304 respectively, port plates, namely 1^{st} and 3^{rd} port plates 105, 305 respectively, and a plurality of pistons and corresponding bores in the respective cylinder blocks. The embodiment illustrated in Figure 3 has 9 pistons and corresponding bores in each of 1^{st} and 3^{rd} cylinder blocks 104, 304. To avoid clutter in Figure 3, only the components related to the No. 1 pistons in each cylinder blocks are called out. However, the components related to the other pistons are similar. In each of 1^{st} and 3^{rd} hydraulic piston drive units 101, 301 respectively then, Figure 3 calls out No. 1 pistons 106, 306, No. 1 cylinders 107, 307, and No. 1 cylinder inlet ports 108, 308 in 1^{st} and 3^{rd} port plates 105, 305.

Associated with 1^{st} and 3^{rd} rotating groups 102, 302 are 1^{st} and 3^{rd} shafts 109, 309 respectively. 1^{st} and 3^{rd} shafts 109, 309 are connected together forming common shaft 200. In this embodiment the connection is through a splined sleeve which is integral with 1^{st} common gear 201, but other methods of forming a common shaft known in the art are possible. Figure 3 also calls out 1^{st} and 3^{rd} shaft bearings 110, 310. Further, to orient the reader, Figure 3 identifies shaft axis 202 of common shaft 200, as well as the horizontal plane 203 and vertical plane 204 of the dual hydrostatic module shown.

In Figure 3, the portion shown is that of the piston and shaft orientations of 1^{st} and 3^{rd} hydraulic piston drive units 101, 301, which are clocked together with a timing angle of 0°. That is, 1^{st} and 3^{rd} hydraulic piston drive units 101, 301 are connected such that the cylinders in the 1^{st} are timed (or "clocked") with the corresponding partner cylinders in the 3^{rd} such that 1^{st} and 3^{rd} hydraulic drive units 101, 301 open (and close) at the same time. The hydrostatic module portion in Figure 3 is shown at an orientation in which No.1 cylinders 107, 307 of both 1^{st} and 3^{rd} hydraulic piston drive units 101, 301 lie in the same vertical plane of the dual hydrostatic module portion. (Not shown in this view are the valve plates and yokes of the 1^{st} and 3^{rd} hydraulic piston drive units.)

Displacement of 1^{st} and 3^{rd} hydraulic piston drive units 101, 301 are set by the angle the cylinder blocks 104 and 304 make with the shaft axis 202. The control system (not shown) ensures that the displacement angles 155 and 355 are the same between 1^{st} and 3^{rd} hydraulic piston drive units 101, 301.

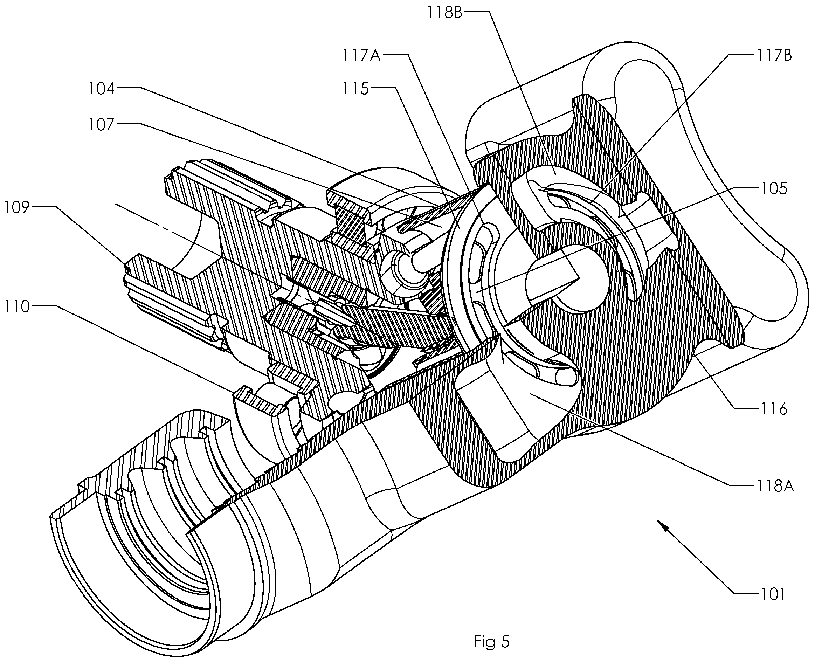

Figure 5 shows 1^{st} hydraulic piston drive unit 101 with 1^{st} valve plate 115 fixed to 1^{st} yoke 116. 1^{st} valve plate 115 comprises A-port 117A and B-port 117B. In a like manner, 1^{st} yoke 116 comprises A-port 118A and B-port 118B. The shape of A-port 117A and B-port 117B in 1^{st} valve plate 115 controls the intake and exhaust of each cylinder in each cylinder block. The kidney shaped A-port 117A and B-port 117B of 1^{st} valve plate 115 will be either at high or low pressure when the pumps are on stroke. Alternatively, the kidney ports could be machined directly into each yoke in which case a separate valve plate is not required. 1^{st} port plate 105 is fixed to and rotates with 1^{st} cylinder block 104 and makes up 1^{st} cylinder block assembly 103. The passages in 1^{st} port plate 105 align with passages in 1^{st} cylinder block 104 and form the inlet ports for each cylinder.

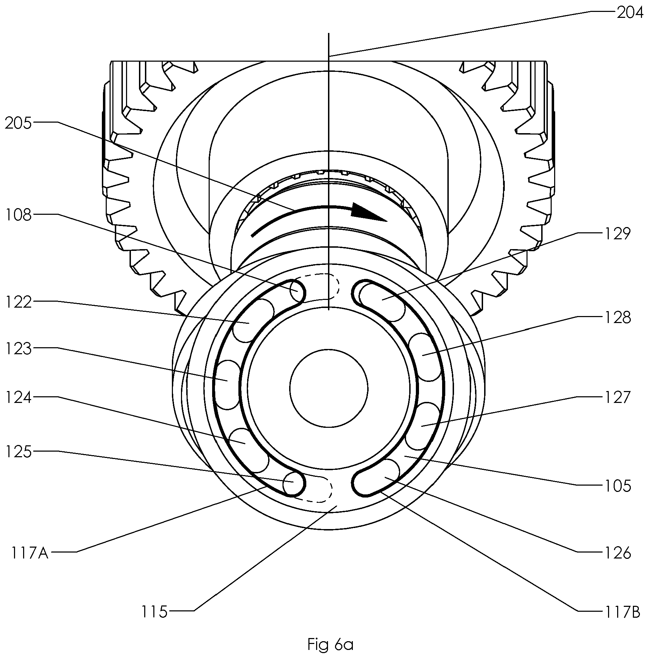

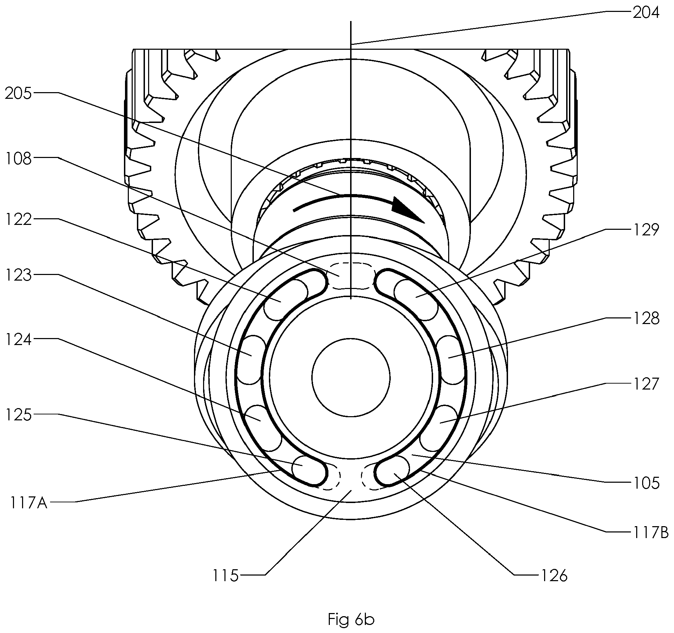

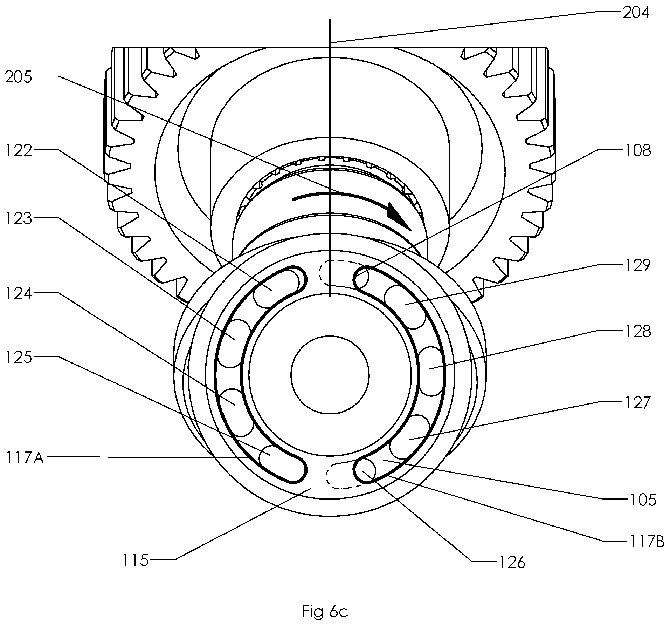

As shown in the sequence of Figures 6a, 6b, and 6c, the number of cylinders in fluid communication with either A-port 117A or B-port 117B of 1^{st} valve plate 115 will change as 1^{st} cylinder block assembly 103 rotates. (Along with A-port 117A or B-port 117B of 1^{st} valve plate 115, Figures 6a, 6b, and 6c identify 1^{st} port plate 105 and No. 1 cylinder inlet port 108 of previous figures. In addition in these figures, the inlet ports of the remaining eight cylinders are called out, namely Nos. 2-9 cylinder inlet ports 122-129 respectively. Further, the direction of rotation 205 of 1^{st} cylinder block assembly 103 and vertical plane 204 of the dual hydrostatic module are called out to orient the reader.) Figure 6a for example shows five cylinder ports, 108, 122-125 in fluid communication with A-port 117A just before the No. 1 cylinder reaches top dead center (TDC) while the B-port 117B has only four cylinder ports, 126-129, in this position. In Figure 6b, the No. 1 cylinder is right at TDC and its inlet port 108 is totally blocked by valve plate 115. Here, both A-port 117A and B-Port 117B are each in fluid communication with four cylinder ports, namely Nos. 2-5 cylinder inlet ports 122-125 and Nos. 6-9 cylinder inlet ports 126-129. By the time 1^{st} cylinder block assembly 103 has rotated to the position shown in Figure 6c, A-port 117A is in fluid communication with four cylinder inlet ports, 122-125, while B-port 117B is in fluid communication with five cylinders, 126-129 and 108. Thus, each port will alternate between being in fluid communication with the minimum and maximum number of cylinders by the number of cylinders in the cylinder block per revolution of the cylinder block. In this example, five and then four cylinders will alternately be at the pressure of A-port 117A, nine times per revolution, while the opposite, i.e. four then five cylinders will alternately be at the pressure of B-port 117B.

The amount of axial load created by the fluid pressure on the pistons is proportional to the sum of the number of cylinders at the A-port pressure plus the sum of the number of cylinders at the B-port pressure. During one mode of operation, the A-port pressure may be high (i.e. the driving pressure) and the B-port pressure may be low (i.e. return or "boost" pressure), and thus the resultant axial load oscillates between a maximum and a minimum amount. In the example illustrated in Figures 6a to 6c, the amplitude of the oscillation is proportional to (5 x High Pressure + 4 x Low Pressure) - (4 x High Pressure + 5 x Low Pressure) which reduces to (1 x High Pressure - 1 x Low Pressure) with the method of the invention. The frequency will be the number of cylinders times the rotational speed.

When two hydraulic piston units of equal size and displacement angles are placed shaft to shaft, the bulk of the axial loads are naturally balanced to a certain extent. However, if the individual cylinders from one side to the other are not timed to line up with each other, a still significant oscillating axial load will occur. Although not huge in magnitude relative to the load arising from an individual hydraulic piston drive unit, it nonetheless will require some sort of axial support to accommodate this load. A reduction in bearing size and support structure can be realized by timing the shafts such that each cylinder from one side each lies in the same plane as its partner cylinder on the opposite side.

By employing such timing, load cancelling along the shaft axes is further improved over that achieved previously in the prior art. Here, essentially any axial imbalance is cancelled. This further reduces any requirement to support axial loads and thus allows radial drive shaft bearings to support an essentially purely radial load. The only axial force the bearings need attend to are to keep the rotating assembly from "wandering" from side to side. In turn, this allows for yet lighter, simpler constructions and provides for greater power density and system efficiency from the system.

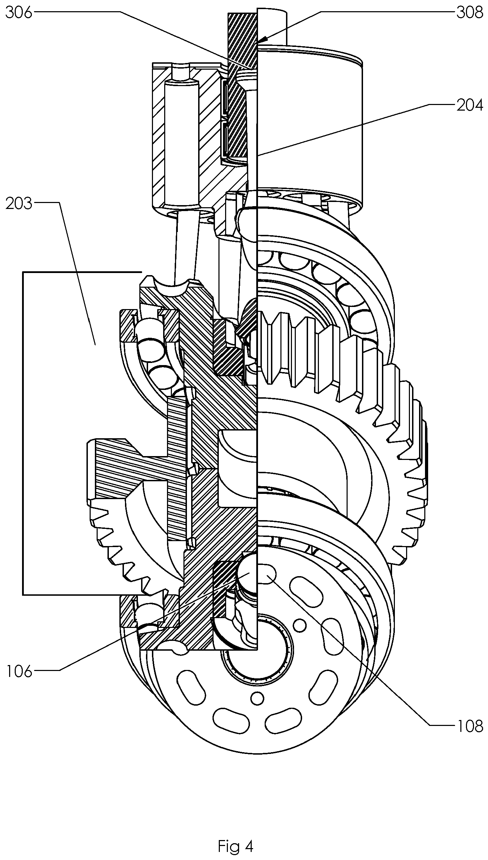

Figure 4 shows a different view of the portion of the dual hydrostatic module of Figure 3. The view here is normal to the inlet end of 1^{st} cylinder block 104 of 1^{st} hydraulic piston drive unit 101 of the module.

In prior art embodiments of a dual hydrostatic module, timing may not have been of concern since untimed prior art systems usually employed some sort of axial bearing to take up the oscillating loads. The drive shafts in such systems are commonly joined with splined couplings. In the manufacturing process, attention typically is not paid to where the initial spline is cut at each end and hence to the alignment of the end splines on a shaft (or with respect to other parts), especially since considerable difficulty can be involved in doing so with tight tolerances.

Although Figures 3 and 4 only illustrate the coupling and timing situation with regards to 1^{st} and 3^{rd} hydraulic piston drive units 101,301, similar advantages can be obtained by configuring the 2^{nd} and 4^{th} hydraulic piston drive units (not shown) in a like manner where they are coupled together with an output timing angle of about 0°.

In a preferred embodiment, the hydraulic piston drive units are bent axis piston drive units but they may also be axial piston hydraulic machines. In either case, at least two of the units are variable.

The embodiments shown in Figures 3 and 4 employ an independent yoke design. In another embodiment of the invention, the first and second hydraulic modules may instead employ a common yoke design. Here, the cylinder blocks (or swash plates in the case of axial piston machines) of the 1^{st} and 2^{nd} hydraulic piston drive units in the first hydraulic module are supported by a common swiveling housing similar to that disclosed in DE962486C. In a like manner, the cylinder blocks (or swash plates) of the 3^{rd} and 4^{th} hydraulic piston drive units in the second hydraulic module are supported by a second common swiveling housing. The 1^{st} and 2^{nd} swiveling housings (or swash plates) are synchronized to create opposing axial forces between 1^{st} & 3^{rd} and 2^{nd} & 4^{th} hydraulic units.

In a further embodiment, first and second hydraulic modules may incorporate multiple (i.e. greater than two) hydraulic piston drive assemblies much like those disclosed in WO2015/001529. Here three or more shafts from the first hydraulic module would be connected to the corresponding three or more shafts on the second hydraulic module to control axial forces. These additional hydraulic piston drive units can also be suitably coupled together in parallel with an appropriate common additional drive shaft or shafts. These additional hydraulic piston drive units can also be coupled with an additional timing angle or angles of about 0°.

## Claims

1. A load cancelling hydrostatic system comprising:
at least a first and second hydrostatic module, wherein the first module comprises a 1^{st} (101) and a 2^{nd} hydraulic piston drive unit and the second module comprises a 3^{rd} (301) and a 4^{th} hydraulic piston drive unit;
a common input drive shaft coupling the 1^{st} and 3^{rd} hydraulic piston drive units (101, 301) together;
a common output drive shaft coupling the 2^{nd} and 4^{th} hydraulic piston drive units together;
wherein each of the hydraulic piston drive units (101, 301) comprises a plurality of pistons (106, 306);
wherein the 1^{st} and 3^{rd} hydraulic piston drive units (101, 301) share a similar geometry and the number and size of the pistons in each is the same;
wherein the 2^{nd} and 4^{th} hydraulic piston drive units share a similar geometry and the number and size of the pistons in each is the same;
wherein the pistons in the 1^{st} and 3^{rd} hydraulic piston drive units (101, 301) are coupled together with an input timing angle; and
wherein the pistons in the 2^{nd} and 4^{th} hydraulic piston drive units are coupled together with an output timing angle;
**characterized in that** at least one of the input and output timing angles is in the range from -0.5° to +0.5°, and
wherein the load cancelling hydrostatic system further comprises bearing sets for the common input and output drive shafts, wherein the bearing sets essentially consist of radial bearings (110, 310).

2. The load cancelling hydrostatic system of claim 1 wherein the input and output timing angles are both in the range from -0.5° to +0.5°.

3. The load cancelling hydrostatic system of claim 1 wherein the first and second hydrostatic modules each comprise an additional hydraulic piston drive unit comprising a plurality of pistons and wherein the additional hydraulic piston drive units are coupled together with a common additional drive shaft with an additional timing angle which is in the range from -0.5° to +0.5°.

4. The load cancelling hydrostatic system of claim 1 wherein the bearing sets do not comprise tapered roller bearings.

5. The load cancelling hydrostatic system of claim 1 wherein the hydraulic piston drive units (101, 301) are mounted to independent or common yokes (116).

6. The load cancelling hydrostatic system of claim 1 wherein the hydraulic piston drive units (101, 301) comprise an odd number of pistons.

7. The load cancelling hydrostatic system of claim 6 wherein the hydraulic piston drive units (101, 301) comprise nine pistons.

8. The load cancelling hydrostatic system of claim 1 wherein the 1^{st} and 3^{rd} hydraulic piston drive units (101, 301) are pumps and the 2^{nd} and 4^{th} hydraulic piston drive units are motors.

9. A method of cancelling load in a hydrostatic system, the hydrostatic system comprising:
at least a first and second hydrostatic module wherein the first module comprises a 1^{st} (101) and a 2^{nd} hydraulic piston drive unit and the second module comprises a 3^{rd} (301) and a 4^{th} hydraulic piston drive unit;
a common input drive shaft coupling the 1^{st} and 3^{rd} hydraulic piston drive units (101, 301) together;
a common output drive shaft coupling the 2^{nd} and 4^{th} hydraulic piston drive units together; and
bearing sets for the common input and output drive shafts, wherein the bearing sets essentially consist of radial bearings;
wherein each of the hydraulic piston drive units (101, 301) comprises a plurality of pistons;
wherein the 1^{st} and 3^{rd} hydraulic piston drive units (101, 301) share a similar geometry and the number and size of the pistons in each is the same;
wherein the 2^{nd} and 4^{th} hydraulic piston drive units share a similar geometry and the number and size of the pistons in each is the same;
wherein the pistons in the 1^{st} and 3^{rd} hydraulic piston drive units (101, 301) are coupled together with an input timing angle; and
wherein the pistons in the 2^{nd} and 4^{th} hydraulic piston drive units are coupled together with an output timing angle;
the method comprising setting at least one of the input and output timing angles to be in the range from -0.5° to +0.5°.

## Patentansprüche

1. Lastunterdrückendes hydrostatisches System, mit:
wenigstens einem ersten und zweiten Hydrostatikmodul, wobei das erste Modul eine erste (101) und eine zweite hydraulische Kolbenantriebseinheit aufweist und das zweite Modul eine dritte (301) und eine vierte hydraulische Kolbenantriebseinheit aufweist,
einer gemeinsamen Eingangswelle, die die erste und dritte hydraulische Kolbenantriebseinheit (101, 301) miteinander koppelt,
einer gemeinsamen Abtriebswelle, die die zweite und vierte hydraulische Kolbenantriebseinheit miteinander koppelt,
wobei jede der hydraulischen Kolbenantriebseinheiten (101, 301) mehrere Kolben (106, 306) aufweist,
wobei die erste und dritte hydraulische Kolbenantriebseinheit (101, 301) eine ähnliche Geometrie haben und die Anzahl und Größe der Kolben in jeder von ihnen die gleiche ist,
wobei die zweite und vierte hydraulische Kolbenantriebseinheit eine ähnliche Geometrie haben und die Anzahl und Größe der Kolben in jeder von ihnen die gleiche ist,
wobei die Kolben in der ersten und dritten hydraulischen Kolbenantriebseinheit (101, 301) mit einem Eingangssteuerwinkel miteinander gekoppelt sind, und
wobei die Kolben in der zweiten und vierten hydraulischen Kolbenantriebseinheit mit einem Ausgangssteuerwinkel miteinander gekoppelt sind,
**dadurch gekennzeichnet, dass** wenigstens einer der Eingangs- und Ausgangssteuerwinkel in dem Bereich von -0,5° bis +0,5° liegt, und
wobei das lastunterdrückende hydrostatische System ferner Lagersätze für die gemeinsamen Eingangs- und Abtriebswellen aufweist, wobei die Lagersätze im Wesentlichen aus Radiallagern (110, 310) bestehen.

2. Lastunterdrückendes hydrostatisches System nach Anspruch 1, bei dem die Eingangs- und Ausgangssteuerwinkel beide in dem Bereich von -0,5° bis +0,5° liegen.

3. Lastunterdrückendes hydrostatisches System nach Anspruch 1, bei dem das erste und zweite Hydrostatikmodul jeweils eine zusätzliche hydraulische Kolbenantriebseinheit mit mehreren Kolben aufweist und bei der die zusätzlichen hydraulischen Kolbenantriebseinheiten durch eine zusätzliche gemeinsame Antriebswelle mit einem zusätzlichen Steuerwinkel, der in dem Bereich von -0,5° bis +0,5° liegt, miteinander gekoppelt sind.

4. Lastunterdrückendes hydrostatisches System nach Anspruch 1, bei dem die Lagersätze keine Kegelrollenlager aufweisen.

5. Lastunterdrückendes hydrostatisches System nach Anspruch 1, bei dem die hydraulischen Kolbenantriebseinheiten (101, 301) an unabhängigen oder gemeinsamen Jochen (116) angebracht sind.

6. Lastunterdrückendes hydrostatisches System nach Anspruch 1, bei dem die hydraulischen Kolbenantriebseinheiten (101, 301) eine ungerade Anzahl Kolben aufweisen.

7. Lastunterdrückendes hydrostatisches System nach Anspruch 6, bei dem die hydraulischen Kolbenantriebseinheiten (101, 301) neun Kolben aufweisen.

8. Lastunterdrückendes hydrostatisches System nach Anspruch 1, bei dem die erste und dritte hydraulische Kolbenantriebseinheit (101, 301) Pumpen sind und die zweite und vierte hydraulische Kolbenantriebseinheit Motoren sind.

9. Verfahren zum Unterdrücken einer Last in einem hydrostatischen System, wobei das hydrostatische System aufweist:
wenigstens ein erstes und zweites Hydrostatikmodul, wobei das erste Modul eine erste (101) und eine zweite hydraulische Kolbenantriebseinheit aufweist und das zweite Modul eine dritte (301) und eine vierte hydraulische Kolbenantriebseinheit aufweist,
eine gemeinsame Eingangswelle, die die erste und dritte hydraulische Kolbenantriebseinheit (101, 301) miteinander koppelt,
eine gemeinsame Abtriebswelle, die die zweite und vierte hydraulische Kolbenantriebseinheit miteinander koppelt, und
Lagersätze für die gemeinsamen Eingangs- und Abtriebswellen, wobei die Lagersätze im Wesentlichen aus Radiallagern bestehen,
wobei jede der hydraulischen Kolbenantriebseinheiten (101, 301) mehrere Kolben (106, 306) aufweist,
wobei die erste und dritte hydraulische Kolbenantriebseinheit (101, 301) eine ähnliche Geometrie haben und die Anzahl und Größe der Kolben in jeder von ihnen die gleiche ist,
wobei die zweite und vierte hydraulische Kolbenantriebseinheit eine ähnliche Geometrie haben und die Anzahl und Größe der Kolben in jeder von ihnen die gleiche ist,
wobei die Kolben in der ersten und dritten hydraulischen Kolbenantriebseinheit (101, 301) mit einem Eingangssteuerwinkel miteinander gekoppelt sind, und
wobei die Kolben in der zweiten und vierten hydraulischen Kolbenantriebseinheit mit einem Ausgangssteuerwinkel miteinander gekoppelt sind,
wobei das Verfahren ein Einstellen wenigstens eines der Eingangs- und Ausgangssteuerwinkel solchermaßen umfasst, dass er in dem Bereich von -0,5° bis +0,5° liegt.

## Revendications

1. Système hydrostatique d'annulation de charge comprenant:
au moins un premier et un second module hydrostatique, le premier module comprenant une 1^{ère} (101) et une 2^{ème} unité de commande de pistons hydrauliques et le second module comprenant une 3^{ème} (301) et une 4^{ème} unité de pistons hydrauliques;
un arbre d'entraînement d'entrée couplant ensemble les 1^{ère} et 3^{ème} unités de commande de pistons hydrauliques (101, 103);
un arbre d'entraînement de sortie couplant ensemble les 2^{ème} et 4^{ème} unités de commande de pistons hydrauliques;
chacune des unités de commande de piston hydraulique (101, 103) comprenant une pluralité de pistons (106, 306);
les 1^{ère} et 3^{ème} unités de commande de pistons hydrauliques (101, 103) partageant une géométrie similaire et le nombre et la taille des pistons dans chacune d'elles étant identiques;
les 2^{ème} et 4^{ème} unités de commande de pistons hydrauliques partageant une géométrie similaire et le nombre et la taille des pistons dans chacune d'elles étant identiques;
les pistons dans les 1^{ère} et 3^{ème} unités de commande de pistons hydrauliques (101, 103) étant couplés ensemble selon un angle de synchronisation d'entrée; et
les pistons dans les 2^{ème} et 4^{ème} unités de commande de pistons hydrauliques étant couplés ensemble selon un angle de synchronisation de sortie;
**caractérisé en ce qu'**au moins l'angle de synchronisation d'entrée et/ou de sortie étant dans la plage comprise entre -0,5° et +0,5°, et
le système hydrostatique d'annulation de charge comprenant en outre des ensembles d'engrenages pour les arbres d'entraînement d'entrée et de sortie, les ensembles d'engrenages étant constitués d'engrenages radiaux (110, 310).

2. Système hydrostatique d'annulation de charge selon la revendication 1, les angles de synchronisation d'entrée et de sotie étant dans la plage comprise entre - 0,5° et +0,5°.

3. Système hydrostatique d'annulation de charge selon la revendication 1, les premier et second modules hydrostatique comprenant chacun une unité de commande de pistons hydrauliques supplémentaire comprenant une pluralité de pistons et l'unité de commande de pistons hydrauliques étant couplé ensemble à un arbre de commande supplémentaire commun selon un angle de synchronisation supplémentaire qui est dans la plage comprise entre -0,5° et +0,5°.

4. Système hydrostatique d'annulation de charge selon la revendication 1, les ensembles d'engrenages ne comprenant pas d'engrenages à rouleaux coniques.

5. Système hydrostatique d'annulation de charge selon la revendication 1, les unités de commande de pistons hydrauliques (101, 301) étant montés des fourches?? indépendantes ou communes (116).

6. Système hydrostatique d'annulation de charge selon la revendication 1, les unités de commande de pistons hydrauliques (101, 103) comprenant un nombre impair de pistons.

7. Système hydrostatique d'annulation de charge selon la revendication 6, les unités de commande de pistons hydrauliques (101, 103) comprenant neuf pistons.

8. Système hydrostatique d'annulation de charge selon la revendication 1, les 1^{ère} et 3^{ème} unités de commande de pistons hydrauliques (101, 103) étant des pompes et les 2^{ème} et 4^{ème} unités de commande de pistons hydrauliques étant des moteurs.

9. Procédé d'annulation de charge dans un système hydrostatique, le système hydrostatique comprenant:
au moins un premier et un second module hydrostatique, le premier module comprenant une 1^{ère} (101) et une 2^{ème} unité de commande de pistons hydrauliques et le second module comprenant une 3^{ème} (301) et une 4^{ème} unité de pistons hydrauliques;
un arbre d'entraînement d'entrée commun couplant ensemble les 1^{ère} et 3^{ème} unités de commande de pistons hydrauliques (101, 103);
un arbre d'entraînement de sortie commun couplant ensemble les 2^{ème} et 4^{ème} unités de commande de pistons hydrauliques;
des ensembles d'engrenages pour les arbres d'entraînement d'entrée et de sortie communs, les ensembles d'engrenages étant constitué sensiblement d'engrenages radiaux;
chacune des unités de commande de piston hydraulique (101, 103) comprenant une pluralité de pistons;
les 1^{ère} et 3^{ème} unités de commande de pistons hydrauliques (101, 103) partageant une géométrie similaire et le nombre et la taille des pistons dans chacune d'elles étant identiques;
les 2^{ème} et 4^{ème} unités de commande de pistons hydrauliques partageant une géométrie similaire et le nombre et la taille des pistons dans chacune d'elles étant identiques;
les pistons dans les 1^{ère} et 3^{ème} unités de commande de pistons hydrauliques (101, 103) étant couplés ensemble selon un angle de synchronisation d'entrée; et
les pistons dans les 2^{ème} et 4^{ème} unités de commande de pistons hydrauliques étant couplés ensemble selon un angle de synchronisation de sortie;
le procédé consistant à régler au moins l'angle de synchronisation d'entrée et/ou de sortie dans la plage comprise entre -0,5° et +0,5°.
